# EUROPÄISCHE PATENTANMELDUNG

(11) **EP 4 647 371 A1**
(43) Veröffentlichungstag der Anmeldung: **12.11.2025**
(21) Anmeldenummer: 24210872.8
(22) Anmeldetag: 05.11.2024
(51) Int. Cl.: B65G 1/137, B65G 11/02, B65G 47/61

(54) **FÖRDERANLAGE UND VERFAHREN ZUM FÖRDERN UND ENTLADEN VON WAREN**

(71) Anmelder: Dürkopp Fördertechnik GmbH, 33719 Bielefeld (DE)
(72) Erfinder: WEND, Michael, 33619 Bielefeld (DE)
(74) Vertreter: Zenz Patentanwälte Partnerschaft mbB

(57) **Zusammenfassung**

Die Erfindung betrifft eine Förderanlage (1) zum Fördern und Entladen von Waren (2), aufweisend eine Förderstrecke (3), welche einen sich in eine Transportförderrichtung (4) erstreckenden Transportabschnitt (3a) und einen sich in eine Abgabeförderrichtung (5) erstreckenden Abgabeabschnitt (3b) aufweist, einen entlang der Förderstrecke (3) hängend bewegbaren Warenträger (6), und eine Entladestation (7), entlang welcher sich der Abgabeabschnitt (3b) erstreckt, wobei die Entladestation (7) eine Abgleitkante (8), einen Entnahmerand (9) und eine sich in eine Abgleitrichtung (11) erstreckende Abgleitfläche (10) aufweist, wobei der Warenträger (6) eine Schmalseite (14) und eine länger als die Schmalseite (14) ausgebildete Längsseite (15) aufweist und um eine Vertikalachse (12) drehbar an der Förderstrecke (3) gelagert ist, und wobei der Warenträger (6) entlang des Abgabeabschnitts (3b) in einer Abgabestellung angeordnet ist, in welcher die Längsseite (15) in einem von der Längsseite (15) und der Abgleitkante (8) ausgebildeten Schnittwinkel (16) von höchstens 45° zu der Abgleitkante (8) angeordnet ist.

## Beschreibung

Die Erfindung richtet sich auf eine Förderanlage und auf ein Verfahren zum Fördern und Entladen von Waren. Insbesondere richtet sich die Erfindung auf eine Förderanlage zum Fördern und zum Entladen eines entlang einer Förderstrecke hängend bewegbar gelagerten und zum Transportieren einer Ware und zum Entladen der transportierten Ware an einer Entladestation ausgebildeten Warenträgers und auf ein Verfahren zum Entladen eines entlang einer Förderstrecke hängend bewegbar gelagerten und zum Transportieren einer Ware und zum Entladen der transportierten Ware an einer Entladestation ausgebildeten Warenträgers.

Einzelne Waren aus einem Wareneingang und/oder einem Warenlager können in einer Förderanlage mit Hilfe von Warenträgern vereinzelt transportiert werden. Die mit einer Ware beladenen Warenträger werden dann über eine Förderstrecke zu einer Entladestation transportiert und dort aus den Warenträgern entladen und gesammelt. Wenn alle einzelnen Waren eines Auftrags komplett an der Entladestation vorliegen, kann der Auftrag gepackt und abtransportiert werden. Für die Förderung von einzelnen Waren sind aus dem Stand der Technik unterschiedliche Förderanlagen bekannt. Beispielsweise ist eine Förderanlage bekannt, bei welcher die einzelnen Waren in taschenartig ausgebildeten Warenträgern zu der Entladestation hängend transportiert werden. An der Entladestation werden die hängend transportierten Waren dann aus den Warenträgern entladen, indem der Warenträger bodenseitig geöffnet wird und die transportierten Waren aus dem Warenträger schwerkraftbedingt nach unten auf eine rampenförmig ausgebildete Abgleitfläche der Entladestation fallen. Die rampenförmige Abgleitfläche erstreckt sich dabei in eine Abgleitrichtung, welche in Richtung der Bewegung des Warenträgers weist. Der Warenträger bewegt sich folglich in die Abgleitrichtung, so dass die Fallhöhe der Ware entlang der Abgleitfläche mit fortschreitender Bewegung zunimmt. Bei dieser Art der Entladung der Waren aus den Warenträgern spielt folglich die zeitliche Koordinierung der Entladung eine bedeutende Rolle. Denn wenn die Ware um den Bruchteil einer Sekunde zeitlich zu spät aus dem Warenträger entladen wird, nimmt die Fallhöhe stark zu, so dass die Gefahr besteht, dass bei zu großer Fallhöhe einzelne Waren bei dem Entladevorgang beschädigt oder sogar zerstört werden.

Der Erfindung liegt die Aufgabe zugrunde, eine Lösung zu schaffen, die auf konstruktiv einfache Weise und kostengünstig eine Förderanlage und ein Verfahren zum Fördern und Entladen von Waren bereitstellt, welche die vorstehend genannten Nachteile vermeiden.

Diese Aufgabe wird erfindungsgemäß gelöst durch eine Förderanlage zum Fördern und Entladen von Waren mit den Merkmalen gemäß dem Anspruch 1.

Die erfindungsgemäße Förderanlage zum Fördern und Entladen von Waren weist eine Förderstrecke, welche einen sich in eine Transportförderrichtung erstreckenden Transportabschnitt und einen sich in eine Abgabeförderrichtung erstreckenden Abgabeabschnitt aufweist, einen entlang der Förderstrecke hängend bewegbar gelagerten Warenträger, welcher zum Transportieren und Entladen der Waren ausgebildet ist, und eine Entladestation auf, entlang welcher sich der Abgabeabschnitt erstreckt. Die Entladestation weist eine Abgleitkante, einen Entnahmerand und eine sich zwischen der Abgleitkante und dem Entnahmerand in eine Abgleitrichtung erstreckende und zum Aufnehmen der von dem Warenträger entladenen Ware ausgebildete Abgleitfläche auf, wobei der Warenträger eine Schmalseite und eine länger als die Schmalseite ausgebildete Längsseite aufweist und um eine Vertikalachse drehbar an der Förderstrecke gelagert ist. Der Warenträger ist ferner entlang des Abgabeabschnitts in einer Abgabestellung angeordnet ist, in welcher die Längsseite in einem von der Längsseite und der Abgleitkante ausgebildeten Schnittwinkel von höchstens 45° zu der Abgleitkante angeordnet ist.

Ebenso wird die Aufgabe erfindungsgemäß gelöst durch ein Verfahren mit den Merkmalen gemäß Anspruch 13.

Bei dem erfindungsgemäßen Verfahren zum Entladen eines entlang einer Förderstrecke hängend bewegbar gelagerten und zum Transportieren einer Ware und zum Entladen der transportierten Ware an einer Entladestation ausgebildeten Warenträgers weist der Warenträger eine Schmalseite und eine länger als die Schmalseite ausgebildete Längsseite auf, wobei die Entladestation eine Abgleitkante, einen Entnahmerand und eine sich zwischen der Abgleitkante und dem Entnahmerand in eine Abgleitrichtung erstreckende und zum Aufnehmen der von dem Warenträger entladenen Ware ausgebildete Abgleitfläche aufweist. Der die Ware transportierende Warenträger wird entlang eines sich in Richtung einer Transportförderrichtung erstreckenden Transportabschnitt der Förderstrecke bewegt. Der Warenträger wird nach seiner Bewegung entlang des Transportabschnitts der Förderstrecke entlang eines an einer Entladestation vorbeiführenden und sich entlang der Abgleitkante erstreckenden Abgabeabschnitts der Förderstrecke bewegt, wobei der Warenträger entlang des Abgabeabschnitts in eine Abgabestellung angeordnet wird, in welcher der Warenträger zwischen der Abgleitkante und dem Entnahmerand angeordnet wird und in welcher die Längsseite in einem von der Längsseite und der Abgleitkante ausgebildeten Schnittwinkel von höchstens 45° zu der Abgleitkante angeordnet ist.

Vorteilhafte und zweckmäßige Ausgestaltungen und Weiterbildungen der Erfindung ergeben sich aus den entsprechenden Unteransprüchen.

Durch die Erfindung werden eine Förderanlage und ein Verfahren zum Fördern und Entladen von Waren zur Verfügung gestellt, wobei sich die Förderanlage durch einen funktionsgerechten und kostengünstigen Aufbau auszeichnet. Erfindungsgemäß wird der Warenträger entlang eines an einer Entladestation vorbeiführenden und sich entlang der Abgleitkante erstreckenden Abgabeabschnitts der Förderstrecke bewegt, wobei zusätzlich der Warenträger entlang des Abgabeabschnitts in eine Abgabestellung angeordnet ist, in welcher die Längsseite in einem von der Längsseite und der Abgleitkante ausbildenden Schnittwinkel von höchstens 45° angeordnet ist. Dadurch, dass der Warenträger entlang eines an einer Entladestation vorbeiführenden und sich entlang der Abgleitkante erstreckenden Abgabeabschnitts der Förderstrecke bewegt wird, ist die zeitliche Koordination der Entladung der Ware aus dem Warenträger nachrangig, denn die Fallhöhe ist bei der Bewegung des Warenträgers entlang der Abgleitkante im Wesentlichen konstant. Da ferner in der Abgabestellung des Warenträgers die Längsseite in einem von der Längsseite und der Abgleitkante ausbildenden Schnittwinkel von höchstens 45° angeordnet ist, wird der Warenträger in einem minimalen Abstand zu der Abgleitkante bewegt, so dass folglich eine minimale Fallhöhe zwischen Warenträger und Abgleitfläche vorhanden ist, so dass die Gefahr einer Beschädigung oder einer Zerstörung der entladenen Ware nicht mehr vorhanden ist.

Die Erfindung sieht in einer Ausgestaltung der Förderanlage vor, dass der Warenträger entlang des Transportabschnitts in einer Transportstellung angeordnet ist. Die Transportstellung kann dabei eine Stellung sein, in welcher die Längsseite des Warenträgers quer zu der Transportförderrichtung angeordnet ist. Alternativ kann die Transportstellung auch eine Stellung für den Warenträger sein, in welcher sich die Längsseite im Wesentlichen in Richtung der Transportförderrichtung erstreckend angeordnet ist. "Im Wesentlichen" bedeutet in diesem Zusammenhang, dass die Längsseite des Warenträgers durchaus leicht schräg in einem Winkelbereich bis zu 5° in Bezug auf die Transportförderrichtung angeordnet ist. Selbstverständlich kann als eine weitere Alternative die Transportstellung der Abgabestellung des Warenträgers entsprechen.

Zur Sicherstellung, dass die transportierte Ware auch ordnungsgemäß an der Entladestation entladen wird und auf die Abgleitfläche auftrifft, sieht die Erfindung in vorteilhafter Ausgestaltung der Förderanlage vor, dass der Warenträger in seiner Abgabestellung zwischen der Abgleitkante und dem Entnahmerand angeordnet ist.

Für eine minimale Fallhöhe der entladenen Ware ist es in weiterer Ausgestaltung der Erfindung von Vorteil, wenn bei der Förderanlage sich der Abgabeabschnitt entlang der Abgleitkante erstreckt. Der Abgabeabschnitt erstreckt sich damit innerhalb der Abgleitfläche und entlang dem dem Entnahmerand gegenüberliegenden Ende der Abgleitfläche, nämlich der Abgleitkante.

Für einen störungsfreien Ablauf an der Entladestation sieht die Erfindung in weiterer Ausgestaltung der Förderanlage vor, dass der Warenträger zum Entladen und schwerkraftbedingten Herausfallen der transportierten Ware an seiner Längsseite öffenbar ausgebildet ist.

Um das Risiko einer Beschädigung oder Zerstörung der entladenen Ware weiter zu verringern, ist in Ausgestaltung der Förderanlage vorgesehen, dass die Abgleitfläche als eine gekrümmte Fläche ausgebildet ist. Diesbezüglich sieht die Erfindung in weiterer Ausgestaltung vor, dass die gekrümmte Fläche mit wenigstens zwei unterschiedlichen Krümmungsradien ausgebildet ist.

Zur Vermeidung einer Beschädigung oder Zerstörung der entladenen Waren ist gemäß einer Ausgestaltung der Förderanlage vorgesehen, dass die Abgleitfläche wenigstens zwei Flächenabschnitte aus unterschiedlich elastisch ausgebildetem Material aufweist.

Die Anordnung des Warenträgers zu der Abgleitkante kann in eine weitere Raumrichtung verschieden ausgeführt sein. Eine denkbare Ausgestaltung hierfür ist dadurch gegeben, dass der Warenträger in seiner Abgabestellung in einem vertikalen Abstand zu der Abgleitkante angeordnet ist. Alternativ ist auch eine Ausgestaltung denkbar, wonach der Warenträger in seiner Abgabestellung zumindest abschnittweise in Anlage an der Abgleitkante bzw. anliegend an der Abgleitkante angeordnet ist.

Zur Sicherstellung, dass die Längsseite des Warenträgers in Anlage an die Abgleitkante gehalten wird, sieht die Erfindung in weiterer Ausgestaltung der Förderanlage vor, dass die Entladestation entlang des Abgabeabschnitts ein erstes Anlagen-Mittel aufweist und der Warenträger entlang seiner Längsseite ein zweites Anlagen-Mittel aufweist, wobei das erste Anlagen-Mittel und das zweite Anlagen-Mittel die Längsseite des Warenträgers in Anlage an die Abgleitkante haltend ausgebildet sind. Die Anlagen-Mittel können beispielsweise magnetisch ausgeführt sein, so dass die Längsseite von der Abgleitkante angezogen und gehalten wird. Alternativ wäre auch als Ausgestaltung der Anlagen-Mittel eine Schienenführung möglich, bei welcher die Längsseite an der Abgleitkante anliegend geführt wird.

Zur Erhöhung des Durchsatzes an Waren und/oder zur Erweiterung der Abgabe-Möglichkeiten von Waren ist in Ausgestaltung der Erfindung vorgesehen, dass eine Zusatz-Entladestation vorgesehen ist, welche sich von der Abgleitkante der Entladestation in eine der Abgleitrichtung entgegengesetzte Richtung erstreckt und eine Zusatz-Abgleitkante, einen Zusatz-Entnahmerand und eine sich zwischen der Zusatz-Abgleitkante und dem Zusatz-Entnahmerand in eine Zusatz-Abgleitrichtung erstreckende und zum Aufnehmen der von dem Warenträger entladenen Ware ausgebildete Zusatz-Abgleitfläche aufweist.

Zur Vermeidung des Risikos einer Beschädigung oder Zerstörung von entladenen Waren ist in weiterer Ausgestaltung vorgesehen, dass der Warenträger entlang des Abgabeabschnitts in einer Zusatz-Abgabestellung angeordnet ist, in welcher der Warenträger zwischen der Zusatz-Abgleitkante und dem Zusatz-Entnahmerand angeordnet ist und in welcher die Längsseite in einem von der Längsseite und der Zusatz-Abgleitkante ausbildenden Schnittwinkel von höchstens 45° angeordnet ist.

Die Erfindung sieht in Ausgestaltung des Verfahrens vor, dass der Warenträger entlang des Transportabschnitts in einer Transportstellung angeordnet bewegt wird. Die Transportstellung kann dabei eine Stellung sein, in welcher die Längsseite des Warenträgers quer zu der Transportförderrichtung angeordnet wird. Alternativ kann die Transportstellung auch eine Stellung für den Warenträger sein, in welcher die Längsseite im Wesentlichen in Richtung der Transportförderrichtung erstreckend angeordnet wird. "Im Wesentlichen" bedeutet in diesem Zusammenhang, dass die Längsseite des Warenträgers durchaus leicht schräg in einem Winkelbereich bis zu 5° in Bezug auf die Transportförderrichtung angeordnet wird. Selbstverständlich kann als eine weitere Alternative die Transportstellung der Abgabestellung des Warenträgers entsprechen.

In Ausgestaltung des erfindungsgemäßen Verfahrens ist vorgesehen, dass die Längsseite des Warenträgers entlang des Abgabeabschnitts in der Abgabestellung in Anlage an die Abgleitkante der Entladestation geführt wird. Dadurch ist sichergestellt, dass entweder eine minimale Fallhöhe für entladene Waren vorliegt oder dass die entladenen Waren aus dem Warenträger direkt von der Abgleitkante auf die Abgleitfläche abgleiten.

Schließlich ist zur Erhöhung des Durchsatzes an Waren und/oder zur Erweiterung der Abgabe-Möglichkeiten von Waren in Ausgestaltung des Verfahrens vorgesehen, dass eine Zusatz-Entladestation vorgesehen ist, welche sich von der Abgleitkante der Entladestation in eine der Abgleitrichtung entgegengesetzte Richtung erstreckt und eine Zusatz-Abgleitkante, einen Zusatz-Entnahmerand und eine sich zwischen der Zusatz-Abgleitkante und dem Zusatz-Entnahmerand in eine Zusatz-Abgleitrichtung erstreckende und zum Aufnehmen der von dem Warenträger entladenen Ware ausgebildete Zusatz-Abgleitfläche aufweist, und wobei der Warenträger entlang des Abgabeabschnitts in einer Zusatz-Abgabestellung angeordnet wird, in welcher der Warenträger zwischen der Zusatz-Abgleitkante und dem Zusatz-Entnahmerand angeordnet wird und in welcher die Längsseite in einem von der Längsseite und der Zusatz-Abgleitkante ausbildenden Schnittwinkel von höchstens 45° angeordnet ist.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind:

In der Zeichnung zeigt:
Figur 1 eine perspektivische Ansicht auf eine erfindungsgemäße Förderanlage mit einer Entladestation,
Figur 2a eine schematische Draufsicht auf die erfindungsgemäße Förderanlage, wobei sich ein Warenträger in einem Abgabeabschnitt einer Förderstrecke befindet und in einer Transportstellung angeordnet ist,
Figur 2b eine schematische Draufsicht auf die erfindungsgemäße Förderanlage, wobei sich der Warenträger in dem Abgabeabschnitt der Förderstrecke befindet und in einer Abgabestellung angeordnet ist,
Figur 2c eine schematische Draufsicht auf die erfindungsgemäße Förderanlage, wobei sich der Warenträger in dem Abgabeabschnitt der Förderstrecke befindet und in einer alternativen Abgabestellung angeordnet ist,
Figur 2d eine schematische Draufsicht auf die erfindungsgemäße Förderanlage, wobei sich der Warenträger in dem Abgabeabschnitt der Förderstrecke befindet und in einer weiteren alternativen Abgabestellung angeordnet ist,
Figur 2e eine schematische Draufsicht auf die erfindungsgemäße Förderanlage, wobei sich der in einer Abgabestellung angeordnete Warenträger in dem Abgabeabschnitt der Förderstrecke befindet und eine Abgabeförderrichtung des Warenträgers schräg zu einer Abgleitkante der Entladestation verläuft,
Figur 2f eine schematische Draufsicht auf die erfindungsgemäße Förderanlage, wobei sich der in einer Abgabestellung angeordnete Warenträger in dem Abgabeabschnitt der Förderstrecke befindet und eine Abgabeförderrichtung des Warenträgers wiederum schräg zu einer Abgleitkante der Entladestation verläuft,
Figur 3a eine schematische Seitenansicht auf die Entladestation, wobei der Warenträger vertikal beabstandet zu der Abgleitkante der Entladestation angeordnet ist,
Figur 3b eine schematische Seitenansicht auf die Entladestation, wobei der Warenträger an der Abgleitkante der Entladestation anliegend angeordnet ist,
Figur 3c eine schematische Seitenansicht auf die Entladestation, wobei der Warenträger an der Abgleitkante der Entladestation anliegend angeordnet ist,
Figur 3d eine schematische Seitenansicht auf die Entladestation, wobei der Warenträger mit Hilfe von Anlagen-Mitteln an der Abgleitkante der Entladestation anliegend angeordnet ist, und
Figur 4 eine Ausführungsform der erfindungsgemäßen Förderanlage mit einer Entladestation und einer Zusatz-Entladestation.

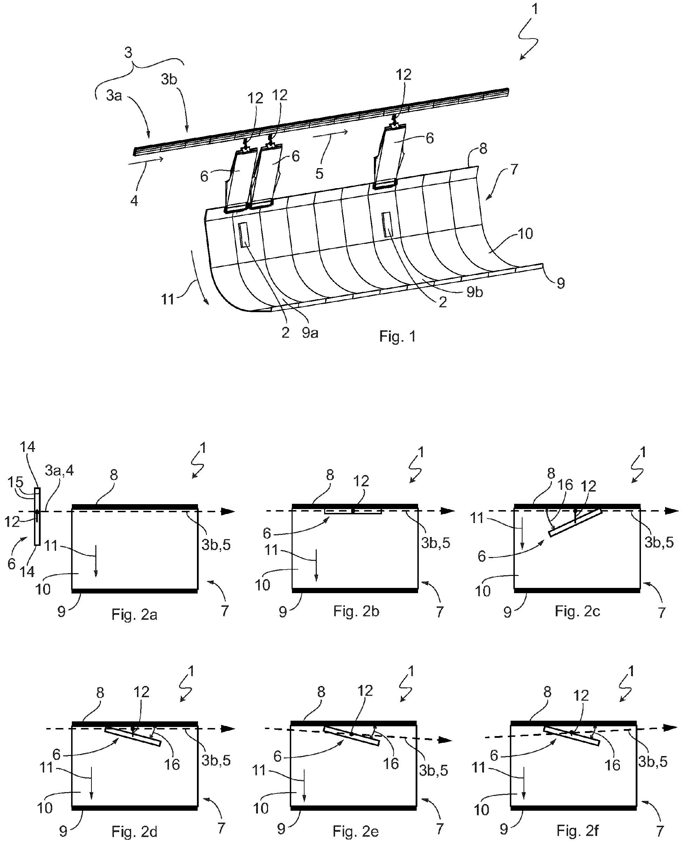

In Figur 1 ist eine erfindungsgemäße Förderanlage 1 zum Fördern und Entladen von Waren 2 in einer Perspektivansicht dargestellt. Die Förderanlage 1 weist eine Förderstrecke 3 auf, welche in dem gezeigten Ausführungsbeispiel einen Transportabschnitt 3a und einen Abgabeabschnitt 3b umfasst. Der Transportabschnitt 3a erstreckt sich in eine Transportförderrichtung 4, wohingegen sich der Abgabeabschnitt 3b in eine Abgabeförderrichtung 5 erstreckt. Bei dem in Figur 1 gezeigten Ausführungsbeispiel verlaufen die Transportförderrichtung 4 und die Abgabeförderrichtung 5 in eine identische Richtung, wobei es alternativ denkbar ist, dass die Transportförderrichtung 4 und die Abgabeförderrichtung 5 in unterschiedliche Richtungen weisen. Die Förderstrecke 3 dient dazu, Warenträger 6 entlang der Förderstrecke 3 zu bewegen, wobei in Figur 1 insgesamt drei Warenträger 6 gezeigt sind, welche an der Förderstrecke 3 hängend gelagert sind und nach Art einer Tasche ausgebildet sind, um einzelne Waren aufnehmen, transportieren und entladen zu können. Jeder einzelne Warenträger 6 ist insbesondere zum Entladen und schwerkraftbedingten Herausfallen der transportierten Ware 2 an einer seiner Längsseiten 15 öffenbar ausgebildet. Folglich ist jeder Warenträger 6 dazu ausgebildet, eine einzelne Ware 2 zu einer Entladestation 7 zu transportieren und an der Entladestation 7 abzugeben, so dass der Warenträger 6 an der Entladestation 7 entladen wird. Aus der Figur 1 ist zu erkennen, dass zwei Waren 2 entladen wurden. Die Entladestation 7 ist Teil der Förderanlage 1, wobei sich der Abgabeabschnitt 3b entlang der Entladestation 7 erstreckt. Die Entladestation 7 weist eine Abgleitkante 8, einen Entnahmerand 9 und eine sich zwischen der Abgleitkante 8 und dem Entnahmerand 9 erstreckenden Abgleitfläche 10 auf. Die Abgleitkante 8 ist vertikal oberhalb des Entnahmerandes 9 angeordnet, so dass an der Abgleitkante 8 entladene Waren 2 schwerkraftbedingt auf der Abgleitfläche 10 in eine Abgleitrichtung 11 hin zu dem Entnahmerand 9 rutschen bzw. gleiten. Die Abgleitfläche 10 ist folglich zum Aufnehmen der von Warenträgern 6 entladenen Waren 2 ausgebildet. An dem Entnahmerand 9 sammeln sich dann die entladenen Waren 2. In Figur 1 wurden die zwei Waren 2 an unterschiedlichen Positionen in Abgabeförderrichtung 5 entladen, wobei es sich um zwei festgelegte Warenstellen 9a und 9b an dem Entnahmerand 9 handeln kann, an welchen sich die Waren 2 eines Auftrags (in Figur 2 also zwei Aufträge) sammeln, welche dann von wenigstens einer Person verpackt werden, wenn alle Waren 2 eines Auftrags komplett an der Warenstelle 9a oder 9b des Entnahmerands 9 vorliegen. Insgesamt ist in Figur 1 der Entnahmerand 9 in zehn Warenstellen unterteilt, wobei nur die beiden Warenstellen 9a und 9b mit Bezugszeichen versehen sind.

In der Figur 1 sind drei Warenträger 6 gezeigt, welche sich entlang des Abgabeabschnitts 3b der Förderstrecke 3 in die Abgabeförderrichtung 5 bewegen, wobei die Warenträger 6 entlang des Abgabeabschnitts 3b in einer Abgabestellung angeordnet sind. Die Warenträger 6 sind zusätzlich drehbar an der Förderstrecke 3 gelagert, so dass ein einzelner Warenträger 6 um eine Vertikalachse 12 drehbar an der Förderstrecke 3 gelagert ist. Die Figur 2a zeigt eine schematische Draufsicht auf die Förderanlage 1, wobei in der Figur 2a ferner dargestellt ist, dass eine jeweiliger Warenträger 6 Schmalseiten 14 und Längsseiten 15 aufweist. Auch wenn nachstehend von einer Schmalseite 14 oder einer Längsseite 15 die Rede ist, so dient dies einer vereinfachten Beschreibung und bezieht sich auf die jeweils ersichtlich angesprochene Seite. Dabei ist bei einem jeweiligen Warenträger 6 die Längsseite 15 länger ausgebildet als die Schmalseite 14.

Bevor ein jeweiliger Warenträger 6 in den Abgabeabschnitt 3b gelangt, ist der Warenträger 6 bei dem gezeigten Ausführungsbeispiel in einer in der Figur 2a gezeigten Transportstellung angeordnet, in welcher platzsparend mehrere Warenträger 6 auf engstem Raum und kompakt entlang des Transportabschnitts 3a angeordnet und bewegt werden können. Ein jeweiliger Warenträger 6 kann folglich zwischen einer Transportstellung und einer Abgabestellung um die Vertikalachse 12 drehbar an der Förderstrecke 3 gelagert sein. Für das in Figur 2a gezeigte Ausführungsbeispiel ist in der Transportstellung die Längsseite 15 eines jeweiligen Warenträgers 6 quer zu der Transportförderrichtung 4 angeordnet. Die Anordnung der Längsseite 15 eines jeweiligen Warenträgers 6 quer zu der Transportförderrichtung 4 ist aber nur eine denkbare Anordnung des Warenträgers 6. Denn alternativ kann die Transportstellung des Warenträgers 6 auch eine Stellung, in welcher sich die Längsseite 15 im Wesentlichen in Richtung der Transportförderrichtung 4 erstreckend angeordnet ist. "Im Wesentlichen" bedeutet dabei, dass die Längsseite 15 des Warenträgers 6 durchaus leicht schräg in einem Winkelbereich bis zu 5° in Bezug auf die Transportförderrichtung 4 angeordnet sein kann. Selbstverständlich kann als eine weitere Alternative die Transportstellung des Warenträgers 6 auch gleich der Abgabestellung des Warenträgers 6 sein, so dass der Warenträger 6 gar nicht um die Vertikalachse 12 gedreht werden muss, wenn der Warenträger 6 aus dem Transportabschnitt 3a in den Abgabeabschnitt 3b bewegt wird.

In den Figuren 2a bis 2f entsprechen die Transportförderrichtung 4 der Richtung der Erstreckung des Transportabschnitts 3a und die Abgabeförderrichtung 5 der Richtung der Erstreckung des Abgabeabschnitt 3b, weil beide Abschnitte 3a und 3b linear bzw. geradlinig ausgebildet sind, was nicht immer zwingend der Fall sein muss und insbesondere für den Transportabschnitt 4 nur für den kleinen, in den Figuren gezeigten Ausschnitt gilt, da die gesamte Transportstrecke kurvenförmige Abschnitte aufweist.

Die Figuren 2b bis 2f zeigen ebenfalls eine Draufsicht auf die Förderanlage 1, wobei der Warenträger 6 in den Figuren 2b bis 2f jeweils in dem Abgabeabschnitt 3b der Förderstrecke 3 und in seiner Abgabestellung zum Entladen einer Ware 2 angeordnet ist. Um zu vermeiden, dass die Ware 2 aufgrund einer zu großen Fallhöhe beim Entladen beschädigt oder zerstört wird, ist erfindungsgemäß vorgesehen, dass die Ware 2 in Nähe der Abgleitkante 8 entladen wird. In den Figuren 2b, 2c und 2d verläuft der Transportabschnitt 3a deckungsgleich mit der Abgleitkante 8 der Entladestation 7, so dass die Abgabeförderrichtung 5 entlang der Abgleitkante 8 verläuft. In der Figur 2b ist der Warenträger 6 im Vergleich zu der in Figur 2a gezeigten Stellung derart um die Vertikalachse 12 gedreht angeordnet, dass die Längsseite 15 des Warenträgers 6 parallel zu der Abgleitkante 8 verlaufend angeordnet ist. Im Sinne der Erfindung ist eine parallele Ausrichtung der Längsseite 15 des Warenträgers 6 aber nur eine denkbare Anordnung des Warenträgers 6. Denn es sind auch Anordnungen von der Erfindung umfasst, wie sie die Figuren 2c und 2d zeigen. Wie aus den Figuren 2c und 2d ersichtlich ist, erstreckt sich der Abgabeabschnitt 3b und die Abgabeförderrichtung 5 parallel zu der Abgleitkante 8, wobei im Sinne der Erfindung ein paralleler Verlauf nicht zwingend erforderlich ist, sondern sich der Abgabeabschnitt 3b und die Abgabeförderrichtung schräg in einem Winkelbereich bis zu maximal 5° zu der Abgleitkante 8 erstrecken können. In der Figur 2c ist nur eine der beiden Schmalseiten 14 (die rechte Schmalseite 14) des Warenträgers 6 in Nähe der Abgleitkante 8 angeordnet, wohingegen in der Figur 2d die andere der beiden Schmalseiten 14 (die linke Schmalseite 14) des Warenträgers in Nähe der Abgleitkante 8 angeordnet ist. In beiden Fällen der Figuren 2c und 2d ist damit die Längsseite 15 derart angeordnet, dass die Längsseite 15 und die Abgleitkante 8 einen Schnittwinkel 16 ausbilden, welcher kleiner als 45° ist. Bei den Figuren 2c und 2d ist die Vertikalachse 12 derart ausgebildet, dass der Warenträger 6 nicht nur um die Vertikalachse 12 drehbar an der Förderstrecke 3 gelagert ist. Die Vertikalachse 12 ist ferner derart ausgebildet, dass die Vertikalachse 12 den Warenträger 6 mit einem gewünschten Versatz 17 zu dem Abgabeabschnitt 3b anordnet, wie es die Figuren 2c und 2d zeigen. Diese Ausbildung der Lagerung des Warenträgers 6 über die Vertikalachse 12 an der Förderstrecke 3 ist beispielsweise dann von Bedeutung, wenn der Abgabeabschnitt 3b und die Abgleitkante 8 nicht parallel zueinander verlaufend angeordnet sind, sondern wenn der Abgabeabschnitt 3b und die Abgleitkante 8 schräg zueinander verlaufend angeordnet sind, wie es in den Figuren 2e und 2f dargestellt ist. Auch bei diesen Anordnungen der Figuren 2e und 2f ist im Sinne der Erfindung vorgesehen, dass durch den mit Hilfe der Vertikalachse 12 realisierbaren Versatz 17 und durch Drehung des Warenträgers 6 um die Vertikalachse 12 eine der beiden Schmalseiten 14 des Warenträgers 6 in Nähe der Abgleitkante 8 angeordnet ist, wobei die Längsseite 15 und die Abgleitkante 8 in beiden Figuren 2e und 2f wiederum einen Schnittwinkel 16 ausbilden, welcher kleiner als 45° ist. Es sei angemerkt, dass auch die Anordnung in der Figur 2b im Sinne der Erfindung einen Schnittwinkel 16 aufweist, wobei dieser Schnittwinkel 0° beträgt. Im Sinne der Erfindung ist für die Figuren 2b bis 2e für eine Anordnung einer Schmalseite 14 in Nähe der Abgleitkante 8 zu verstehen, dass der Warenträger 6 entweder abschnittsweise mit einer von Schmalseite 14 und Längsseite 15 gebildeten Ecke oder mit einer Längsseite 15 an der Abgleitkante 8 physisch anliegt oder aber in einer Draufsicht (wie in den Figuren 2b bis 2f) virtuell anliegend und doch physisch beabstandet angeordnet ist. Zur Vermeidung einer Beschädigung oder Zerstörung ist damit im Sinne der Erfindung der Warenträger 6 zumindest abschnittsweise (zum Beispiel mit einer Ecke des Warenträgers 6) in physischer und/oder in virtueller Anlage an der Abgleitkante 8 angeordnet, wenn der Warenträger 6 zum Entladen entlang des Abgabeabschnitts 3b bewegt wird, wobei der Warenträger 6 entlang des Abgabeabschnitts 3b in seiner Abgabestellung angeordnet ist, in welcher die Längsseite 15 bzw. eine der Längsseiten 15 in einem von dieser Längsseite 15 und der Abgleitkante 8 ausgebildeten Schnittwinkel 16 von höchstens 45° zu der Abgleitkante 8 angeordnet ist. Im Sinne der Erfindung sind damit Schnittwinkel 16 in einem Bereich von 0° bis 45° denkbar. Wie den Figuren 2b bis 2f ferner zu entnehmen ist, ist der Warenträger 6 in seiner Abgabestellung zwischen der Abgleitkante 8 und dem Entnahmerand 9 angeordnet ist. Eine Stellung, bei welcher der Warenträger 6 abschnittsweise auf der dem Entnahmerand 9 abgewandten Seite der Abgleitkante 8 angeordnet ist, ist nicht für die Erfindung vorgesehen. Damit der Warenträger 6 entlang der Längserstreckung der Entladestation 7 bzw. entlang der Abgleitkante 8 bewegt wird, erstreckt sich der Abgabeabschnitt 3b entlang der Abgleitkante 8, wobei unter dem Begriff "entlang" in diese Zusammenhang zu verstehen ist, dass sich der Abgabeabschnitt 3b entweder parallel oder deckungsgleich zu der Abgleitkante 8 erstreckt (siehe Figuren 2b, 2c und 2d) oder dass der Abgabeabschnitt 3b und die Abgleitkante 8 schräg (unter einem Winkel von zum Beispiel maximal 30°) zueinander verlaufend angeordnet sind (siehe Figuren 2e und 2f).

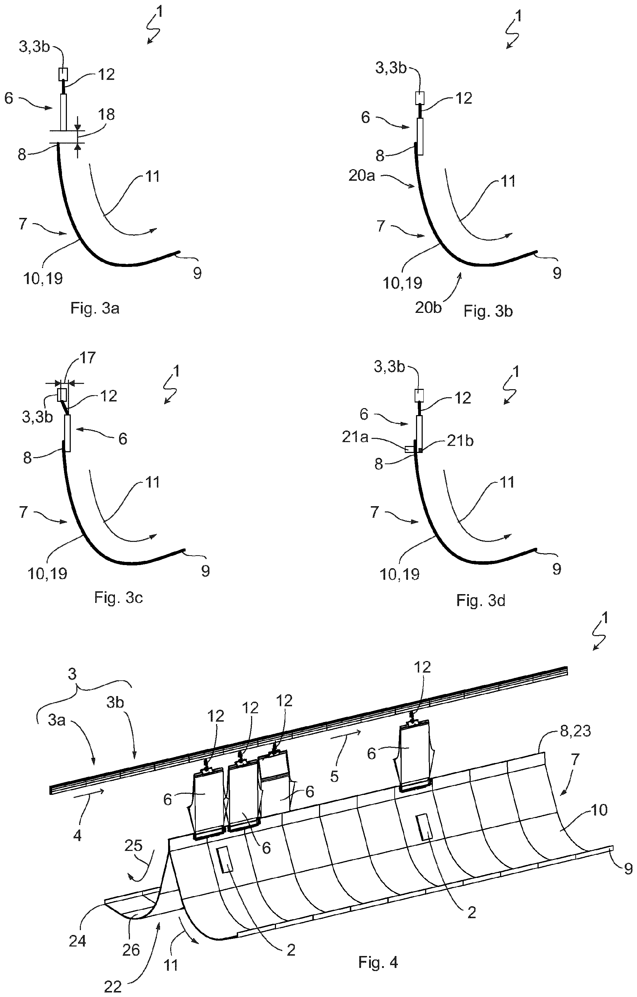

In den Figuren 3a bis 3d sind in schematischen Seitenansichten weitere Ausführungsformen für die erfindungsgemäße Förderanlage 1 gezeigt, wobei aus den Seitenansichten ersichtlich ist, dass die Förderstrecke vertikal betrachtet oberhalb der Entladestation 7 verlaufend angeordnet ist. Aus den Figuren 3a bis 3d wird ersichtlich, was mit physischer und/oder in virtueller Anlage eines Abschnitts des Warenträgers 6 an der Abgleitkante 8 gemeint ist. In Figur 3a ist der Warenträger 6 in seiner Abgabestellung in einem vertikalen Abstand 18 zu der Abgleitkante 8 angeordnet, so dass der Warenträger 6 physisch nicht an der Abgleitkante 8 anliegt. Jedoch würde der Warenträger 6 abschnittsweise an der Abgleitkante 8 in einer Draufsicht (wie beispielsweise in Figur 2b) virtuell anliegen. Demgegenüber zeigen die Figuren 3b, 3c und 3d den Warenträger 6 jeweils in seiner Abgabestellung, in welcher der Warenträger 6 zumindest abschnittweise in Anlage an die Abgleitkante 8 angeordnet ist, denn der Warenträger 6 liegt abschnittsweise in den Figuren 3b bis 3d physisch an der Abgleitkante 8 an.

Neben einer Erläuterung der Bedeutung der physischen und/oder virtuellen Anlage des Warenträgers 6 an der Abgleitkante 8 (bei physischer Anlage ist selbstverständlich dann auch eine virtuelle/optische Anlage - in Draufsicht auf die Förderanlage 1 - gegeben) und eine beabstandeten Anordnung des Warenträgers 6 zu der Abgleitkante 8 (siehe Figur 3a) zeigen die Figuren 3a bis 3d verschiedene Ausgestaltungen der Entladestation 7. Bei allen Ausgestaltungen ist die Abgleitfläche 10 der Entladestation 7 eine gekrümmte Fläche 19 ausgebildet. Die gekrümmte Fläche 19 ist dabei in den Figuren 3a bis 3d mit zwei unterschiedlichen Krümmungsradien 20a und 20b (in Figur 3b mit Bezugszeichen gezeigt) ausgebildet, wobei es alternativ auch denkbar wäre, dass die gekrümmte Fläche 19 nur einen einzigen Krümmungsradius aufweist. Um eine Beschädigung oder Zerstörung der entladenen Ware zu vermeiden, kann ferner die Abgleitfläche 10 wenigstens zwei Flächenabschnitte aus unterschiedlich elastisch ausgebildetem Material aufweisen, so dass bei großer Fallhöhe der Fall der entladenen Ware 2 abgefedert wird, wobei die Abgleitfläche 10 selbstverständlich auch vollständig ein elastisch abfederndes Material aufweisen kann.

Die Figur 3c zeigt die vorstehend angesprochene Ausgestaltung der Vertikalachse 12, welcher einen horizontalen Versatz 17 des Warenträgers 6 zu der Förderstrecke 3 realisieren kann, was die Flexibilität der Anordnung der Förderstrecke 3 in Bezug auf die Abgleitkante 8 erhöht, so dass größere Toleranzen durchaus bei der Anordnung von Förderstrecke 3 zu Abgleitkante 8 wählbar sind.

In der Figur 3d ist eine Möglichkeit dargestellt, um das Anliegen des Warenträgers 6 an der Abgleitkante 8 zu unterstützen. Bei dieser Möglichkeit der Figur 3d weist die Entladestation 3 entlang des Abgabeabschnitt 3b ein erstes Anlagen-Mittel 21a auf, wohingegen der Warenträger 6 entlang seiner Längsseite 15 ein zweites Anlagen-Mittel 21b aufweist. Das erste Anlagen-Mittel 21a und das zweite Anlagen-Mittel 21b sind derart ausgebildet, dass die Längsseite 15 des Warenträgers 6 in Anlage an die Abgleitkante 8 gehalten ist. Die Anlagen-Mittel 21a und 21b können beispielsweise magnetisch ausgeführt sein, so dass die Längsseite 15 von der Abgleitkante 8 angezogen und gehalten wird. Alternativ wäre auch als Ausgestaltung der Anlagen-Mittel eine Schienenführung möglich, bei welcher die Längsseite 15 an der Abgleitkante 8 anliegend geführt ist.

In Figur 4 ist eine weitere Ausführungsform gezeigt, durch welche der Durchsatz an Waren 2 auf möglichst geringem Raum erhöht werden kann. Wie die Figur 4 zeigt, weist die Förderanlage 1 zusätzlich eine Zusatz-Entladestation 22 auf. Die Zusatz-Entladestation 22 erstreckt sich von der Abgleitkante 8 der Entladestation 7 in eine der Abgleitrichtung 11 entgegengesetzte Richtung und ist spiegelsymmetrisch zu der Entladestation 7 aufgebaut. Dementsprechend weist die Zusatz-Entladestation 22 eine Zusatz-Abgleitkante 23, einen Zusatz-Entnahmerand 24 und eine sich zwischen der Zusatz-Abgleitkante 23 und dem Zusatz-Entnahmerand 24 in eine Zusatz-Abgleitrichtung 25 erstreckende und zum Aufnehmen der von dem Warenträger 6 entladenen Ware 2 ausgebildete Zusatz-Abgleitfläche 26 auf. Bei der dargestellten Ausführungsform entspricht die Zusatz-Abgleitkante 23 der Abgleitkante 8, so dass dieses Bauteil nur einmal vorgesehen sein muss. Ferner wird die eine Förderstrecke 3 sowohl von der Entladestation 7 als auch von der Zusatz-Entladestation 22 genutzt, wobei die Warenträger 6 beispielsweise mittels einer vor der Entladestation 7 bzw. der Zusatz-Entladestation 22 angeordneten Weiche entweder der Entladestation 7 oder der Entladestation 22 zugewiesen werden können. Die zuvor für die Figuren 3a bis 3d beschriebenen Merkmale gelten selbstverständlich auch für die Zusatz-Entladestation 22, so dass auf Wiederholungen zu diesen Merkmalen verzichtet wird. Ebenso gilt bei der Zusatz-Entladestation 22, dass der Warenträger 6 entlang des Abgabeabschnitts 3b in einer Zusatz-Abgabestellung angeordnet ist, in welcher der Warenträger 6 zwischen der Zusatz-Abgleitkante 23 und dem Zusatz-Entnahmerand 24 angeordnet ist und in welcher die Längsseite 15 in einem von der Längsseite 15 und der Zusatz-Abgleitkante 23 ausbildenden Schnittwinkel von höchstens 45° zu der Zusatz-Abgleitkante 23 angeordnet ist.

Für das erfindungsgemäße Verfahren zum Entladen eines entlang der Förderstrecke 3 hängend bewegbar gelagerten und zum Transportieren einer Ware 2 und zum Entladen der transportierten Ware 2 an der Entladestation 7 ausgebildeten Warenträgers 6 wird der die Ware 2 transportierende Warenträger 6 entlang des sich in Richtung der Transportförderrichtung 4 erstreckenden Transportabschnitts 3a der Förderstrecke 3 in einer Transportstellung angeordnet bewegt, in welcher die Längsseite 15 des Warenträgers 6 quer zu der Transportförderrichtung 4 angeordnet ist. Der Warenträger 6 wird nach seiner Bewegung entlang des Transportabschnitts 3a der Förderstrecke 3 entlang des an der Entladestation 7 vorbeiführenden und sich entlang der Abgleitkante 8 erstreckenden Abgabeabschnitts 3b der Förderstrecke 3 bewegt. Der Warenträger 6 wird dann entlang des Abgabeabschnitts 3b in der Abgabestellung angeordnet, in welcher der Warenträger 6 zwischen der Abgleitkante 8 und dem Entnahmerand 9 angeordnet wird und in welcher die Längsseite 15 in dem von der Längsseite 15 und der Abgleitkante 8 ausgebildeten Schnittwinkel 16 von höchstens 45° zu der Abgleitkante 8 angeordnet. Dabei kann die Längsseite 15 des Warenträgers 6 oder ein Abschnitt des Warenträgers 6 entlang des Abgabeabschnitts 3b in der Abgabestellung in Anlage an die Abgleitkante 8 der Entladestation 7 geführt werden. Sofern die Förderanlage 1 zusätzlich die Zusatz-Entladestation 22 aufweist, sieht das Verfahren vor, dass der Warenträger 6 entlang des Abgabeabschnitts 3b in der Zusatz-Abgabestellung angeordnet wird, in welcher der Warenträger 6 zwischen der Zusatz-Abgleitkante 23 und dem Zusatz-Entnahmerand 24 angeordnet wird und in welcher die Längsseite 15 in einem von der Längsseite 15 und der Zusatz-Abgleitkante 23 ausbildenden Schnittwinkel von höchstens 45° zu der Zusatz-Abgleitkante 23 angeordnet wird.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

### Bezugszeichenliste

- 1: Förderanlage
- 2: Waren
- 3: Förderstrecke
- 3a: Transportabschnitt
- 3b: Abgabeabschnitt
- 4: Transportförderrichtung
- 5: Abgabeförderrichtung
- 6: Warenträger
- 7: Entladestation
- 8: Abgleitkante
- 9: Entnahmerand
- 9a: Warenstelle
- 9b: Warenstelle
- 10: Abgleitfläche
- 11: Abgleitrichtung
- 12: Vertikalachse
- 14: Schmalseite
- 15: Längsseite
- 16: Schnittwinkel
- 17: Versatz
- 18: vertikaler Abstand
- 19: gekrümmte Fläche
- 20a: Krümmungsradius
- 20b: Krümmungsradius
- 21a: erstes Anlagen-Mittel
- 21b: zweites Anlagen-Mittel
- 22: Zusatz-Entladestation
- 23: Zusatz-Abgleitkante
- 24: Zusatz-Entnahmerand
- 25: Zusatz-Abgleitrichtung
- 26: Zusatz-Abgleitfläche

## Patentansprüche

**1.** Förderanlage (1) zum Fördern und Entladen von Waren (2), aufweisend eine Förderstrecke (3), welche einen sich in eine Transportförderrichtung (4) erstreckenden Transportabschnitt (3a) und einen sich in eine Abgabeförderrichtung (5) erstreckenden Abgabeabschnitt (3b) aufweist, einen entlang der Förderstrecke (3) hängend bewegbar gelagerten Warenträger (6), welcher zum Transportieren und Entladen der Waren (2) ausgebildet ist, und eine Entladestation (7), entlang welcher sich der Abgabeabschnitt (3b) erstreckt,
wobei die Entladestation (7) eine Abgleitkante (8), einen Entnahmerand (9) und eine sich zwischen der Abgleitkante (8) und dem Entnahmerand (9) in eine Abgleitrichtung (11) erstreckende und zum Aufnehmen der von dem Warenträger (6) entladenen Ware (2) ausgebildete Abgleitfläche (10) aufweist,
wobei der Warenträger (6) eine Schmalseite (14) und eine länger als die Schmalseite (14) ausgebildete Längsseite (15) aufweist und um eine Vertikalachse (12) drehbar an der Förderstrecke (3) gelagert ist,
wobei der Warenträger (6) entlang des Abgabeabschnitts (3b) in einer Abgabestellung angeordnet ist, in welcher die Längsseite (15) in einem von der Längsseite (15) und der Abgleitkante (8) ausgebildeten Schnittwinkel (16) von höchstens 45° zu der Abgleitkante (8) angeordnet ist.

**2.** Förderanlage (1) nach Anspruch 1, wobei der Warenträger (6) in seiner Abgabestellung zwischen der Abgleitkante (8) und dem Entnahmerand (9) angeordnet ist.

**3.** Förderanlage (1) nach Anspruch 1 oder 2, wobei sich der Abgabeabschnitt (3b) entlang der Abgleitkante (8) erstreckt.

**4.** Förderanlage (1) nach einem der vorhergehenden Ansprüche, wobei der Warenträger (6) zum Entladen und schwerkraftbedingten Herausfallen der transportierten Ware (2) an seiner Längsseite (15) öffenbar ausgebildet ist.

**5.** Förderanlage (1) nach einem der vorhergehenden Ansprüche, wobei die Abgleitfläche (11) als eine gekrümmte Fläche (19) ausgebildet ist.

**6.** Förderanlage (1) nach Anspruch 5, wobei die gekrümmte Fläche (19) mit wenigstens zwei unterschiedlichen Krümmungsradien (20a, 20b) ausgebildet ist.

**7.** Förderanlage (1) nach einem der vorhergehenden Ansprüche, wobei die Abgleitfläche (10) einen Flächenabschnitt aus elastisch ausgebildetem Material aufweist.

**9.** Förderanlage (1) nach einem der vorhergehenden Ansprüche, wobei der Warenträger (6) in seiner Abgabestellung in einem vertikalen Abstand (18) zu der Abgleitkante (8) angeordnet ist.

**9.** Förderanlage (1) nach einem der Ansprüche 1 bis 7, wobei der Warenträger (6) in seiner Abgabestellung zumindest abschnittweise an der Abgleitkante (8) anliegend angeordnet ist.

**10.** Förderanlage (1) nach einem der vorhergehenden Ansprüche, wobei die Entladestation (7) entlang des Abgabeabschnitts (3b) ein erstes Anlagen-Mittel (21a) aufweist und der Warenträger (6) entlang seiner Längsseite (15) ein zweites Anlagen-Mittel (21b) aufweist, wobei das erste Anlagen-Mittel (21a) und das zweite Anlagen-Mittel (21b) die Längsseite (15) des Warenträgers (6) in Anlage an die Abgleitkante (8) haltend ausgebildet sind.

**11.** Förderanlage (1) nach einem der vorhergehenden Ansprüche, wobei eine Zusatz-Entladestation (22) vorgesehen ist, welche sich von der Abgleitkante (8) der Entladestation (7) in eine der Abgleitrichtung (11) entgegengesetzte Richtung erstreckt und eine Zusatz-Abgleitkante (23), einen Zusatz-Entnahmerand (24) und eine sich zwischen der Zusatz-Abgleitkante (23) und dem Zusatz-Entnahmerand (24) in eine Zusatz-Abgleitrichtung (25) erstreckende und zum Aufnehmen der von dem Warenträger (6) entladenen Ware (2) ausgebildete Zusatz-Abgleitfläche (26) aufweist.

**12.** Förderanlage (1) nach Anspruch 11, wobei der Warenträger (6) entlang des Abgabeabschnitts (3b) in einer Zusatz-Abgabestellung angeordnet ist, in welcher der Warenträger (6) zwischen der Zusatz-Abgleitkante (23) und dem Zusatz-Entnahmerand (24) angeordnet ist und in welcher die Längsseite (15) in einem von der Längsseite (15) und der Zusatz-Abgleitkante (23) ausbildenden Schnittwinkel (16) von höchstens 45° zu der Zusatz-Abgleitkante (23) angeordnet ist.

**13.** Verfahren zum Entladen eines entlang einer Förderstrecke (3) hängend bewegbar gelagerten und zum Transportieren einer Ware (2) und zum Entladen der transportierten Ware (2) an einer Entladestation (7) ausgebildeten Warenträgers (6), wobei der Warenträger (6) eine Schmalseite (14) und eine länger als die Schmalseite (14) ausgebildete Längsseite (15) aufweist, wobei die Entladestation (7) eine Abgleitkante (8), einen Entnahmerand (9) und eine sich zwischen der Abgleitkante (8) und dem Entnahmerand (9) in eine Abgleitrichtung (11) erstreckende und zum Aufnehmen der von dem Warenträger (6) entladenen Ware (2) ausgebildete Abgleitfläche (10) aufweist,
wobei der die Ware (2) transportierende Warenträger (6) entlang eines sich in Richtung einer Transportförderrichtung (4) erstreckenden Transportabschnitts (3a) der Förderstrecke (3) bewegt wird,
wobei der Warenträger (6) nach seiner Bewegung entlang des Transportabschnitts (3a) der Förderstrecke (3) entlang eines an der Entladestation (7) vorbeiführenden und sich entlang der Abgleitkante (8) erstreckenden Abgabeabschnitts (3b) der Förderstrecke (3) bewegt wird, und
wobei der Warenträger (6) entlang des Abgabeabschnitts (3b) in eine Abgabestellung angeordnet wird, in welcher der Warenträger (6) zwischen der Abgleitkante (8) und dem Entnahmerand (9) angeordnet wird und in welcher die Längsseite (15) in einem von der Längsseite (15) und der Abgleitkante (8) ausgebildeten Schnittwinkel (16) von höchstens 45° zu der Abgleitkante (8) angeordnet wird.

**14.** Verfahren nach Anspruch 13, wobei die Längsseite (15) des Warenträgers (6) entlang des Abgabeabschnitts (3b) in der Abgabestellung in Anlage an die Abgleitkante (8) der Entladestation (7) geführt wird.

**15.** Verfahren nach Anspruch 13 oder 14, wobei eine Zusatz-Entladestation (22) vorgesehen ist, welche sich von der Abgleitkante (8) der Entladestation (7) in eine der Abgleitrichtung (11) entgegengesetzte Richtung erstreckt und eine Zusatz-Abgleitkante (23), einen Zusatz-Entnahmerand (24) und eine sich zwischen der Zusatz-Abgleitkante (23) und dem Zusatz-Entnahmerand (24) in eine Zusatz-Abgleitrichtung (25) erstreckende und zum Aufnehmen der von dem Warenträger (6) entladenen Ware (2) ausgebildete Zusatz-Abgleitfläche (26) aufweist, und
wobei der Warenträger (6) entlang des Abgabeabschnitts (3b) in einer Zusatz-Abgabestellung angeordnet wird, in welcher der Warenträger (6) zwischen der Zusatz-Abgleitkante (23) und dem Zusatz-Entnahmerand (24) angeordnet wird und in welcher die Längsseite (15) in einem von der Längsseite (15) und der Zusatz-Abgleitkante (23) ausbildenden Schnittwinkel von höchstens 45° zu der Zusatz-Abgleitkante (23) angeordnet wird.
